# EUROPÄISCHE PATENTANMELDUNG

(11) **EP 1 782 683 A1**
(43) Veröffentlichungstag der Anmeldung: **09.05.2007**
(21) Anmeldenummer: 06022294.0
(22) Anmeldetag: 25.10.2006
(51) Int. Cl.: A01G 3/053, B27B 17/08

(54) **Motorbetriebenes Gartengerät**

(30) Priorität: 07.11.2005 DE 102005053422
(71) Anmelder: GARDENA Manufacturing GmbH, 89079 Ulm (DE)
(72) Erfinder: Mock, Axel, 89134 Blaustein (DE); Kohl, Peter, 89257 Illertissen (DE); Kaupp, Rainer, 89143 Blaubeuren (DE)
(74) Vertreter: Patentanwälte Ruff, Wilhelm, Beier, Dauster & Partner

(57) **Zusammenfassung**

Ein motorbetriebenes Gartengerät mit einem Antriebsstrang (1) zur Übertragung einer Antriebsbewegung eines Antriebsmotors an eine Arbeitseinrichtung, mit einer dem Antriebsstrang zugeordneten Stopeinrichtung (3), die zumindest eine mit dem Antriebsstrang verbundene Stopfläche (4) und zumindest ein zwischen einer Ruhestellung und einer Funktionsstellung bewegbares Blockierelement (5) für eine formschlüssige Übertragung einer Blockierkraft auf die Stopfläche aufweist, ist bekannt. Erfindungsgemäß sind der Stopfläche Führungsmittel (6) zugeordnet, die zur Ausrichtung des Blockierelements in Richtung der Stopfläche vorgesehen sind.

## Beschreibung

Die Erfindung betrifft ein motorbetriebenes Gartengerät mit einem Antriebsstrang zur Übertragung einer Antriebsbewegung eines Antriebsmotors an eine Arbeitseinrichtung, mit einer dem Antriebsstrang zugeordneten Stopeinrichtung, die zumindest eine mit dem Antriebsstrang verbundene Stopfläche und zumindest ein zwischen einer Ruhestellung und einer Funktionsstellung bewegbares Blockierelement für eine formschlüssige Übertragung einer Blockierkraft auf die Stopfläche aufweist.

Aus dem Stand der Technik sind motorbetriebene Gartengeräte wie insbesondere Heckenscheren und Kettensägen bekannt, die einen Antriebsmotor, insbesondere einen Elektromotor oder einen Verbrennungsmotor aufweisen, der über einen Antriebsstrang, beispielsweise ein Zahnradgetriebe oder einen Riementrieb, mit einer Arbeitseinrichtung verbunden ist. Bei einer Heckenschere ist die Arbeitseinrichtung ein oszillierend bewegbares Messerblatt, das mit einer feststehenden oder ebenfalls oszillierend bewegbaren Gegenklinge schiebebeweglich verbunden ist und das für das Beschneiden von Hecken vorgesehen ist. Bei einer Kettensäge ist die Arbeitseinrichtung eine Sägekette, die für eine endlose Umlaufbewegung um einen schwertförmigen Stützkörper vorgesehen ist und die für ein Durchtrennen von Ästen vorgesehen ist. Für einen sicheren und vorschriftsmäßigen Betrieb derartiger motorgetriebener Gartengeräte ist eine Stopeinrichtung bekannt, die insbesondere in einem Ruhezustand oder bei einer Fehlbedienung des Gartengeräts die Arbeitseinrichtung blockiert oder rasch zum Stillstand bringt. Die Stopeinrichtung kann von einem Benutzer des Gartengerätes über Betätigungsmittel wie eine Drucktaste an einem Handgriff des Gartengeräts deaktiviert werden, um eine Blockade der Arbeitseinrichtung aufzuheben und das Gartengerät in Betrieb nehmen zu können. Tritt während des Betriebs eine Fehlbedienung des Gartengerätes auf, beispielsweise wenn das Gartengerät vom Bediener losgelassen wird, so kann die Stopeinrichtung aktiviert werden. Bei Aktivierung der Stopeinrichtung wird die Arbeitseinrichtung, beispielsweise das oszillierende Messerblatt oder die umlaufende Sägekette, binnen kürzester Zeit bis zum Stillstand gebremst, um Verletzungen durch das eventuell unkontrolliert bewegte Gartengerät zu vermeiden. Für einige motorbetriebene Gartengeräte sind hinsichtlich der Zeitdauer, innerhalb derer die Arbeitseinrichtung zuverlässig zum Stillstand gekommen sein muss, gesetzliche Vorschriften zu beachten.

Die bekannte Stopeinrichtung weist zumindest eine mit dem Antriebsstrang verbundene Stopfläche und zumindest ein zwischen einer Ruhestellung und einer Funktionsstellung bewegbares Blockierelement auf. Die Stopfläche und das Blockierelement ermöglichen eine formschlüssige Übertragung einer Blockierkraft von einem Gehäuse, das dem Antriebsstrang zugeordnet ist, auf die Stopfläche und damit auf die Arbeitseinrichtung, die gebremst und zum Stillstand gebracht werden soll. Das Blockierelement kann beispielsweise als Blockierstift ausgeführt sein, der bei Aktivierung der Stopeinrichtung in Richtung seiner Längsachse auf die Stopfläche zu bewegt wird und eine formschlüssige Wirkverbindung mit der Stopfläche eingeht. Dadurch kann eine weitere Bewegung des Antriebsstrangs und der daran angekoppelten Arbeitseinrichtung blockiert werden. Durch die Blockierung des Antriebsstrangs treten bedingt durch die in kurzer Zeit aus einer Bewegung in den Stillstand zu verzögernden Massen des Antriebsmotors, des Antriebsstrangs und der Arbeitseinrichtung hohe Kräfte an dem Blockierelement und der Stopfläche auf, die zu einem hohen Verschleiß des Blockierelements und/oder der Stopfläche führen können.

Die Aufgabe der Erfindung besteht darin, ein motorbetriebenes Gartengerät mit einer Stopeinrichtung zu schaffen, die einen verringerten Verschleiß und/oder eine erhöhte Belastbarkeit aufweist.

Diese Aufgabe wird durch ein motorbetriebenes Gartengerät der eingangs genannten Art gelöst, bei dem der Stopfläche Führungsmittel zugeordnet sind, die zur Ausrichtung des Blockierelements in Richtung der Stopfläche vorgesehen sind. Die Führungsmittel sind vorgesehen, um eine Mindestüberdeckung des Blockierelements mit der Stopfläche zu gewährleisten, so dass das Blockierelement mit einer Mindestfläche auf der Stopfläche zu liegen kommt. Somit ist gewährleistet, dass eine vorgebbare maximale Flächenpressung zwischen Blockierelement und Stopfläche nicht überschritten wird, die ansonsten zu einer Überlastung oder einem Materialversagen in der Stopeinrichtung führen könnte. Die Mindestfläche ist dabei vorzugsweise so gewählt, dass eine plastische Deformation des Blockierelements und der Stopfläche vermieden wird, so dass auch bei einer hohen Anzahl von Lastspielen, also von Blockiervorgängen, kein funktionserheblicher Verschleiß der Stopeinrichtung eintritt. Dadurch kann insbesondere verhindert werden, dass das Blockierelement mit einer derart geringen Überdeckung auf die Stopfläche auftrifft, dass es zu einem lokalen Materialversagen am Blockierelement oder an der Stopfläche kommt und ein Materialabtrag stattfindet. Durch einen Materialabtrag tritt eine unerwünschte Geometrieänderung der Stopfläche und/oder des Blockierelements ein, die bei häufigerem Auftreten zu einer Fehlfunktion oder einem Totalausfall der Stopeinrichtung führen kann. Durch die Ausrichtung des Blockierelements auf die Stopfläche und die dadurch gewährleistete Mindestüberdeckung kann eine derartige Überlastung der Stopeinrichtung vermieden werden. Die Führungsmittel richten das Blockierelement auf die Stopfläche aus, indem sie Führungskräfte ausüben. Die Führungskräfte bewirken eine Auslenkung des Blockierelements in Richtung der Funktionsposition und stellen die Mindestüberdeckung zwischen Blockierelement und Stopfläche sicher. Somit kann auch bei einem langen Lebenszyklus des motorgetriebenen Gartengeräts eine einwandfreie Funktion der Stopeinrichtung gewährleistet werden.

In Ausgestaltung der Erfindung weisen die Führungsmittel zumindest eine Steuerfläche auf, die für eine zumindest abschnittsweise Zwangsführung des Blockierelements zwischen der Ruhestellung und der Funktionsstellung vorgesehen ist. Mit einer Steuerfläche, die insbesondere unmittelbar mit dem Blockierelement oder mit einer dem beweglichen Blockierelement zugeordneten Führungseinrichtung in Wirkverbindung treten kann, ist die Ausübung einer Zwangsbewegung auf das Blockierelement möglich. Die Steuerfläche kann derart ausgelegt werden, dass das Blockierelement zwischen der Ruhestellung und der Funktionsstellung lediglich in Richtung der Stopfläche bewegt wird oder dass das Blockierelement zwangsläufig auf die Stopfläche geführt wird. Als Steuerflächen kommen insbesondere Nutabschnitte oder Nocken in Frage, die das Blockierelement in Richtung der Stopfläche verdrängen und damit die Zwangssteuerung sicherstellen.

In weiterer Ausgestaltung der Erfindung sind die Führungsmittel starr mit dem Antriebsstrang verbunden. Damit kann eine einfache und kompakte Gestaltung der Stopeinrichtung gewährleistet werden. Die Führungsmittel sind insbesondere unmittelbar an einem oder mehreren Einzelelementen des Antriebsstrangs, insbesondere an Zahnrädern oder Riemenscheiben angebracht, und können insbesondere einstückig an den Einzelelementen angeformt sein. Dies erlaubt eine vorteilhafte Montage der Stopeinrichtung, da die Führungsmittel bereits mit den Einzelelemente des Antriebsstrangs gekoppelt sind und keiner Ausrichtung bedürfen. Eine Justage der Stopeinrichtung zum Ausgleich fertigungs- und/oder montagebedingter Toleranzen kann gegebenenfalls entfallen.

In weiterer Ausgestaltung der Erfindung ist das Blockierelement in eine zwischen der Ruhestellung und der Funktionsstellung angesiedelte Wartestellung bringbar, in der es durch die Führungsmittel erfassbar und in die Funktionsstellung überführbar ist. Die Wartestellung wird vom Blockierelement insbesondere dann eingenommen, wenn eine Betätigungseinrichtung des Gartengeräts nicht mehr betätigt wird und insbesondere eine Fehlbedienung, beispielsweise bei einem Fallenlassen des Gartengeräts, vorliegt. Beim Stand der Technik wird das Blockierelement nach Auslösung durch die Betätigungseinrichtung aus der Ruhestellung unmittelbar in Richtung der Funktionsstellung bewegt. Das Blockierelement trifft daher in Abhängigkeit von der Stellung der Stopfläche zum Zeitpunkt der Auslösung der Stopeinrichtung gegebenenfalls mit einer geringen Überdeckung auf die Stopfläche auf, so dass unerwünschte Beschädigungen am Blockierelement und/ oder Stopfläche auftreten können. Bei der erfindungsgemäßen Stopeinrichtung wird das Blockierelement bei Auslösung der Stopeinrichtung durch die Betätigungseinrichtung zunächst aus der Ruhestellung in die Wartestellung überführt. Erst wenn das Blockierelement in konstruktiv vorgegebener Weise in der Wartestellung angelangt ist, wird es von den Führungsmitteln in Richtung der Stopfläche ausgerichtet. Dadurch wird unabhängig von der Relativposition der Stopfläche gegenüber dem Blockierelement zum Zeitpunkt der Auslösung der Stopeinrichtung durch die Führungsmittel sichergestellt, dass das Blockierelement mit der Mindestüberdeckung auf die Stopfläche auftrifft. Die Bewegung des Blockierelements aus der Ruhestellung über die Wartestellung in die Funktionsstellung nimmt bei geeigneter Gestaltung des Blockierelements, der Führungsmittel und der Stopfläche keinen oder nur einen geringfügig längeren Zeitraum in Anspruch als bei einer bekannten Stopeinrichtung. Somit kann die erfindungsgemäße Stopeinrichtung ohne weiteres auch die gesetzlichen Bestimmungen bezüglich der Zeitdauer zwischen Auslösung der Stopeinrichtung und dem vollständigen Stillstand der Arbeitseinrichtung erfüllen. Bei der erfindungsgemäßen Stopeinrichtung ist zudem sichergestellt, dass mit dem Auftreffen des Blockierelements auf die Stopfläche mit der Mindestüberdeckung die volle Bremskraft übertragen werden kann. Ein Herausrutschen, Herausspringen oder Überfahren der Stopfläche durch das Blockierelement, die zu einer Fehlfunktion der Stopeinrichtung und zu einem erhöhten Verschleiß führen würde, kann somit vermieden werden.

In weiterer Ausgestaltung der Erfindung bilden die Führungsmittel an dem insbesondere gleichsinnig oder reversibel bewegbaren Antriebsstrang zumindest einen Neutralbereich und zumindest einen Erfassungsbereich für das zumindest eine Blockierelement, wobei eine Auslenkung des Blockierelements aus der Wartestellung in die Funktionsstellung im Erfassungsbereich vorgesehen ist. Der Neutralbereich der Führungsmittel ist der Wartestellung des Blockierelements gleichzusetzen. Im Neutralbereich werden von den relativ zur Blockierelement bewegten Führungsmitteln keine oder zumindest nur unwesentliche Führungskräfte auf das Blockierelement ausgeübt, so dass keine funktionserhebliche Auslenkung des Blockierelements auftritt. Der Erfassungsbereich der Führungsmittel ist derjenige Bereich, in dem die Führungsmittel mit dem Blockierelement in Wirkverbindung treten, um eine Ausrichtung auf die Stopfläche hervorzurufen. Die Führungsmittel sind derart an dem Antriebsstrang, der insbesondere für eine Übertragung einer gleichsinnigen oder reversierenden Antriebsbewegung, insbesondere einer Rotations- und/oder Translationsbewegung, vorgesehen ist, angeordnet, so dass sie in einem wiederkehrenden Zyklus mit dem Blockierelement in der Wartestellung in Wirkverbindung treten können. Bevorzugt sind die Führungsmittel in einem schnell bewegten Bereich des Antriebsstrangs angeordnet, so dass sie mit einer hohen Frequenz das Blockierelement in der Wartestellung passieren und damit eine kurze Reaktionszeit der Stopeinrichtung, dass heißt eine schnelle Überführung des Blockierelements in die Funktionsposition sicherstellen können.

In weiterer Ausgestaltung der Erfindung ist das Blockierelement mit zumindest zwei Freiheitsgraden der Bewegung, insbesondere einem translatorischen und einem rotatorischen Freiheitsgrad, an einem dem Antriebsstrang zugeordneten Gehäuse angebracht. Damit kann das Blockierelement aus der Ruhestellung in einer ersten Richtung in die Wartestellung gebracht werden und anschließend in einer zweiten Richtung auf die Stopfläche in die Funktionsstellung ausgerichtet werden. Durch die zumindest zwei Freiheitsgrade der Bewegung kann eine konstruktiv günstige Auslegung der Führungsmittel erreicht werden, die das Blockiermittel längs des zweiten Freiheitsgrades der Bewegung ausrichten bzw. auslenken. Die Anbringung des Blockierelements an einem dem Antriebsstrang zugeordneten Gehäuse ermöglicht einen Kraftfluss zwischen dem Blockierelement, dem Antriebsstrang und dem Gehäuse, so dass die auftretenden Blockierkräfte im Gehäuse aufgenommen werden können.

In weiterer Ausgestaltung der Erfindung ist dem Blockierelement zumindest eine Federeinrichtung zugeordnet, die für die Aufbringung einer Rückstellkraft entgegen einer von den Führungsmitteln ausübbaren Führungskraft vorgesehen ist. Die Federeinrichtung stellt sicher, dass sich das Blockierelement nicht in undefinierter Weise ohne den Einfluss der Führungsmittel in die Funktionsstellung bewegt. Die Federeinrichtung hält das Blockierelement so lange in der Wartestellung, bis die Führungsmittel die Zwangsführung und die damit verbundenen Führungskräfte auf das Blockierelement ausüben und die Ausrichtung auf die Stopfläche vornehmen. Als Federeinrichtung kommen insbesondere Blattfedern, Spiralfedern, Wendelfedern oder Elastomerelemente in Frage. Bei einer bevorzugten Ausführungsform der Erfindung ist jedem der Freiheitsgrade der Bewegung des Blockierelements eine separate Federeinrichtung zugeordnet, wobei eine erste Federeinrichtung das Blockierelement aus der Ruhestellung in die Wartestellung presst, während eine zweite Federeinrichtung sicherstellt, dass das Blockierelement entgegen der Wirkrichtung der Führungskräfte der Führungsmittel in der Wartestellung gehalten werden kann, solange keine Führungskräfte ausgeübt werden.

In weiterer Ausgestaltung der Erfindung sind die zumindest eine Stopfläche und die Führungsmittel an einer Blockierscheibe vorgesehen, die an einem drehbeweglichen Übertragungselement des Antriebsstrangs angebracht ist. Die Blockierscheibe bildet damit eine zentrale Komponente der Stopeinrichtung, sie weist die notwendigen Geometrien auf, um das Blockierelement aus der Wartestellung in die Funktionsstellung zu bringen, in der die Übertragung der Blockierkraft zwischen Blockierelement und Stopfläche und damit auf die Blockierscheibe stattfindet. Durch die Ankopplung der Stopfläche und der Führungsmittel an ein drehbewegliches Übertragungselement des Antriebsstrangs, insbesondere ein Zahnrad oder eine Riemenscheibe, ist sichergestellt, dass eine unmittelbare Kopplung zwischen der Antriebsbewegung des Antriebsstrangs und den von der Stopeinrichtung aufgebrachten Blockierkräften besteht. Zudem kann in einfacher Weise gewährleistet werden, dass die Führungsmittel die für eine kurze Reaktionszeit der Stopeinrichtung vorteilhafte zyklische Relativbewegung gegenüber dem Blockierelement in direkter Kopplung mit der Antriebsbewegung durchführen. Die Blockierscheibe kann insbesondere einstückig an dem drehbeweglichen Übertragungselement angeformt sein und kann insbesondere eine kreisförmige oder kreisringförmige Grundfläche aufweisen, die orthogonal zu einer Drehachse des Übertragungselements ausgerichtet ist. Bei einer bevorzugten Ausführungsform der Erfindung ist das Blockierelement für die Ausübung einer Blockierkraft in Umfangsrichtung der Blockierscheibe vorgesehen. Die Blockierkraft wirkt insbesondere in tangentialer Richtung zur Rotationsbewegung der Blockierscheibe und bewirkt bezogen auf die Rotationsachse des Übertragungselements ein Brems- bzw. Blockiermoment, das zur gewünschten Stillsetzung des Antriebsstrangs führt.

In weiterer Ausgestaltung der Erfindung sind die Führungsmittel derart gestaltet, dass der zumindest eine Neutralbereich und der zumindest eine Erfassungsbereich jeweils kreissegmentartig aneinandergrenzend an der Blockierscheibe angeordnet sind. Damit ist bei einer Rotationsbewegung des Übertragungselements, dem die Blockierscheibe zugeordnet ist, sichergestellt, dass das in die Wartestellung überführte Blockierelement in einem konstruktiv vorgebbaren Zyklus in die Funktionsstellung überführt werden kann.

In weiterer Ausgestaltung der Erfindung ist die Steuerfläche bezogen auf eine Rotationsachse der Blockierscheibe zumindest abschnittsweise kreisförmig und/oder spiralförmig gestaltet und ist für eine seitliche Auslenkung des Blockierelements in radialer Richtung vorgesehen. Damit kann das Blockierelement mittels der Steuerfläche der Führungsmittel in radialer Richtung aus der Wartestellung in die Funktionsstellung überführt werden. Durch eine abschnittsweise kreisförmige Gestaltung der Steuerfläche kann dem Blockierelement in der Wartestellung eine ausreichende Zeitspanne zur Verfügung gestellt werden, innerhalb derer es entlang einer ersten Bewegungsrichtung vollständig aus der Ruhestellung in die Wartestellung bewegt wird. Das Blockierelement wird durch die abschnittsweise kreisförmige Steuerfläche auf die Ausrichtung in die Funktionsstellung vorbereitet, es findet noch keine Auslenkung in radialer Richtung statt. Durch die abschnittsweise spiralförmige Steuerfläche wird das Blockierelement in radialer Richtung ausgelenkt und somit an die Stopfläche angenähert oder zur Stopfläche hingeführt. Durch die Spiralform wird eine verschleißarme Ausübung der Führungskräfte auf das Blockierelement gewährleistet. Bei einer bevorzugten Ausführungsform der Erfindung weist die Steuerfläche einen kreisförmigen Abschnitt und einen spiralförmigen Abschnitt auf, die sich bezogen auf die Rotationsachse der Blockierscheibe insgesamt über einen Winkelbereich von annähernd 300 Grad erstrecken, während im übrigen Winkelbereich der Blockierscheibe keine Steuerfläche vorgesehen ist. Im Bereich des spiralförmigen Abschnitts der Steuerfläche kann das Blockierelement in radialer Richtung zwischen der Wartestellung und der Funktionsstellung um einen Betrag ausgelenkt werden, der zumindest einer Ausdehnung des Blockierelements in radialer Richtung entspricht. Damit ist in der Wartestellung sichergestellt, dass das Blockierelement nicht in unerwünschter Weise auf die Stopfläche trifft. Hingegen kann durch die Auslenkung in radialer Richtung mittels des spiralförmigen Abschnitts sichergestellt werden, dass das Blockierelement mit der Mindestüberdeckung auf die Stopfläche trifft.

In weiterer Ausgestaltung der Erfindung ist das Blockierelement für eine im wesentlichen achsparallel zur Rotationsachse der Blockierscheibe ausgerichtete Bewegung zwischen der Ruhestellung und der Wartestellung sowie für eine im wesentlichen radial zur Rotationsachse der Blockierscheibe gerichtete Bewegung zwischen der Wartestellung und der Funktionsstellung gestaltet. Damit kann das Blockierelement bei Auslösung der Stopeinrichtung zunächst in Richtung der Rotationsachse aus der Ruhestellung in die Wartestellung verschoben werden, ohne Gefahr zu laufen, bereits bei dieser Bewegung in unerwünschter Weise mit der Stopfläche in Wirkverbindung zu treten. Durch die anschließende Auslenkung in radialer Richtung wird das Blockierelement insbesondere durch die spiralförmige Steuerfläche in vorteilhafter Weise entgegen der Federkraft der Federeinrichtung in die Funktionsstellung überführt und kann die Blockierkraft übertragen. Die Übertragung der Blockierkraft von der Stopfläche auf das Blockierelement ist bei einer Beweglichkeit des Blockierelements in achsparalleler Richtung zur Rotationsachse der Blockierscheibe und in radialer Richtung bezogen auf die Rotationsachse vorteilhaft, da in Richtung der im wesentlichen tangential zur Blockierscheibe auftretenden Blockierkräfte zumindest im Wesentlichen keine Beweglichkeit des Blockierelements vorliegt und somit eine einfache und wirkungsvolle Abstützung der Blockierkräfte erfolgen kann.

In weiterer Ausgestaltung der Erfindung ist die Stopfläche an einem von der Blockierscheibe abragenden Nocken ausgebildet. Damit kann eine vorteilhaft große Stopfläche für das Blockierelement zur Verfügung gestellt werden. Darüber hinaus kann der Nocken derart ausgelegt werden, dass er eine Elastizität und Flexibilität aufweist, die zu einer Abmilderung der Blockierkräfte führt, ohne dass dadurch ein erhöhter Verschleiß am Blockierelement oder an der Stopfläche auftritt. Bei einer bevorzugten Ausführungsform der Erfindung ist die Stopfläche als Kombination einer Nut und eines im Enderbereich der Nut erhaben angeordneten Nockens ausgeführt, so dass eine maximale Stopfläche und somit eine niedrige Flächenpressung für das Blockierelement gewährleistet werden kann.

In weiterer Ausgestaltung der Erfindung sind die Führungsmittel zumindest abschnittsweise als Führungsnut in der Blockierscheibe gestaltet. Die von den Führungsmitteln auf das Blockierelement aufzubringenden Führungskräfte werden über Seitenwände der Führungsnut unmittelbar in die Blockierscheibe abgeleitet, so dass eine kompakte und stabile Ausführung der Führungsmittel gewährleistet werden kann.

In weiterer Ausgestaltung der Erfindung ist die Blockierscheibe einer im Antriebsstrang vorgesehenen Kupplungseinrichtung zugeordnet, die für eine zeitweilige, lösbare Kopplung zwischen Antriebsmotor und Arbeitseinrichtung vorgesehen ist. Mittels der Kupplungseinrichtung kann eine Auftrennung des Antriebsstrangs zwischen dem Antriebsmotor und der Arbeitseinrichtung bewirkt werden. Durch eine derartige Auftrennung muss die Stopeinrichtung nur einen Bruchteil der Gesamtmasse von Antriebsmotor, Antriebsstrang und Arbeitseinrichtung abbremsen, so dass nur noch eine erheblich reduzierte Blockierkraft aufgebracht werden muss. Die Kupplungseinrichtung kann insbesondere in einem der Arbeitseinrichtung benachbarten Abschnitt des Antriebsstrangs oder unmittelbar an der Arbeitseinrichtung angebracht sein, um nur möglichst wenige Einzelbestandteile des Antriebsstrangs von der Stopeinrichtung abbremsen lassen zu müssen. Die Kupplungseinrichtung kann insbesondere als Rollenkupplung ausgeführt sein, bei der eine Kraftübertragung durch Kupplungsrollen vorgesehen ist, die von einem Rollenkäfig geführt werden und formschlüssig an Auflaufflächen eines Mitnehmerteils aufgenommen werden können. Bei einer bevorzugten Ausführungsform der Erfindung ist die Blockierscheibe an dem Rollenkäfig aufgenommen und ermöglicht durch das Aufbringen der Blockierkraft neben der Stillegung der Arbeitseinrichtung auch ein Auskuppeln der Rollenkupplung.

In weiterer Ausgestaltung der Erfindung ist die Kupplungseinrichtung zur lösbaren Ankopplung einer mit der Arbeitseinrichtung verbundenen Abtriebswelle an ein dem Antriebsmotor zugeordnetes Antriebszahnrad vorgesehen. Damit kann ein besonders kompakte Gestaltung des Antriebsstrangs und der darin aufgenommenen Kupplungseinrichtung erreicht werden, da die Kupplungseinrichtung insbesondere in das Antriebszahnrad integriert werden kann und somit keinen zusätzlichen Raum beansprucht. Bei einer vorteilhaften Ausführungsform der Erfindung ist die Abtriebswelle als Doppelexzenterwelle ausgeführt und ermöglicht somit eine Ankopplung von schiebe- und/oder schwenkbeweglichen Arbeitseinrichtungen für einen gleichsinnigen oder gegenläufigen Betrieb.

In weiterer Ausgestaltung der Erfindung weist die Arbeitseinrichtung zumindest ein Messerblatt, insbesondere zwei gegenläufige Messerblätter, auf. Das Messerblatt kann mit mehreren Schneidezähnen versehen sein, die jeweils mit orthogonal zu einer Bewegungsrichtung des Messerblatts ausgerichteten Schneidkanten versehen sind und die in Wirkverbindung mit einem weiteren starr oder beweglich am Gartengerät angebrachten Messerblatt ein Schneidwerkzeug, insbesondere ein Schneidenblatt einer Heckenschere bilden.

In weiterer Ausgestaltung der Erfindung ist das Blockierelement mit zumindest einer Griffeinrichtung derart gekoppelt, dass eine formschlüssige Wirkverbindung zwischen Blockierelement und Stopfläche durch Betätigung der zumindest einen Griffeinrichtung aufhebbar ist. Damit kann die Stopeinrichtung als Sicherheitseinrichtung für ein motorbetriebenes Gartengerät eingesetzt werden.

Weitere Vorteile und Merkmale der Erfindung ergeben sich aus den Ansprüchen sowie aus der nachfolgenden Beschreibung eines bevorzugten Ausführungsbeispiels, das anhand der Zeichnungen dargestellt ist.
- Fig. 1: zeigt in einer Explosionsdarstellung ein Gehäusebauteil eines motorbetriebenen Gartengeräts mit einer Kupplungseinrichtung und einer zugeordneten Stopeinrichtung,
- Fig. 2: in einer Explosionsdarstellung die Kupplungseinrichtung und die zugeordnete Stopeinrichtung gemäß der Fig. 1,
- Fig. 3: in perspektivischer Darstellung die Kupplungseinrichtung mit Stopeinrichtung in einer Ruhestellung,
- Fig. 4: in perspektivischer Darstellung die Kupplungseinrichtung mit Stopeinrichtung in einer Wartestellung,
- Fig. 5: in perspektivischer Darstellung die Kupplungseinrichtung mit Stopeinrichtung in einer Funktionsstellung,
- Fig. 6: in einer Draufsicht die Kupplungseinrichtung mit Stopeinrichtung in einer Ruhestellung,
- Fig. 7: in einer Draufsicht die Kupplungseinrichtung mit Stopeinrichtung in einer Wartestellung,
- Fig. 8: in einer Draufsicht die Kupplungseinrichtung mit Stopeinrichtung in einer Funktionsstellung,
- Fig. 9: in einer Seitenansicht die Kupplungseinrichtung mit Stopeinrichtung in einer Ruhestellung,
- Fig. 10: in einer Seitenansicht die Kupplungseinrichtung mit Stopeinrichtung in einer Wartestellung,
- Fig. 11: in einer Seitenansicht die Kupplungseinrichtung mit Stopeinrichtung in einer Funktionsstellung,
- Fig. 12: eine Schnittansicht des Antriebsstrangs gemäß der Fig. 1.

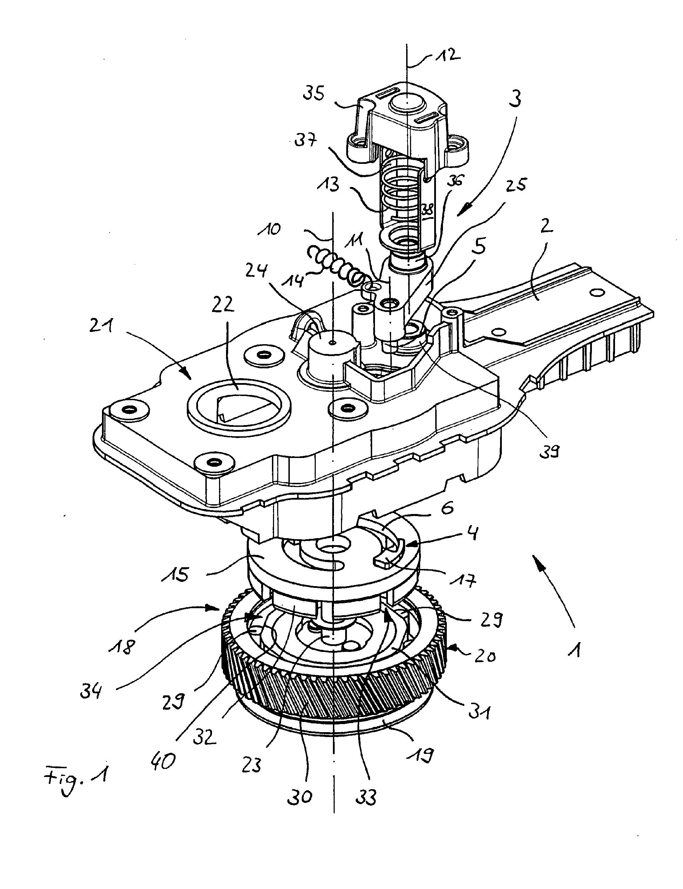

Ein in den Fig. 1 und 12 dargestellter Antriebsstrang 1 weist ein Gehäuse 2 auf, das für eine Kraftübertragung zwischen einem nicht dargestellten Antriebsmotor, dem Antriebsstrang 1 und einer mit dem Antriebsstrang koppelbaren, nicht dargestellten Arbeitseinrichtung vorgesehen ist. Dazu ist an dem Gehäuse 2 ein Motorflansch 21 vorgesehen, der die Anbringung des Antriebsmotors erlaubt, wobei zentral zum Motorflansch 21 am Gehäuse ein als Ritzelbohrung 22 gestalteter Durchbruch vorgesehen ist, der eine drehbewegliche Wirkverbindung zwischen einem auf einer Motorwelle des Antriebsmotors aufgenommenen Antriebsritzel und einem zum Antriebsstrang 1 zugehörigen, als Antriebszahnrad 20 ausgeführten Übertragungselement ermöglicht. Das Antriebszahnrad 20 weist eine ringförmige Kontur auf und ist an einer Außenfläche mit einer Verzahnung 30 versehen.

Dem Antriebszahnrad 20 ist eine Abtriebswelle 19 zugeordnet, die als Doppelexzenterwelle ausgeführt ist und die für die Aufnahme von nicht dargestellten Messerblättern vorgesehen ist. Die Abtriebswelle 19 ist mit einer Achse 23 drehbar in einer Achsaufnahme 24 des Gehäuses 2 aufgenommen und nimmt das Antriebszahnrad 20 drehbar auf. Die beiden exzentrischen Achsabschnitte 26, 27 der Doppelexzenterwelle sind jeweils exzentrisch zu einer Rotationsachse 10 der Abtriebswelle 19, die durch die Achse 23 definiert wird, angeordnet und ermöglichen bei einer Rotation der Abtriebswelle 19 eine gegenläufige oszillierende Bewegung der daran anbringbaren Messerblätter.

Auf die Abtriebswelle 19 ist ein an einer Außenfläche polygonförmig gestalteter Kupplungsring 31 drehfest aufgepresst, der zentral in das ringförmig gestaltete Antriebszahnrad 20 hineinragt und der mit einer zylindrischen Innenfläche 28 des Antriebszahnrads 20 eine Ringnut 34 bildet. In der Ringnut 34 sind mehrere Kupplungsrollen 29 aufgenommen, die für eine Kraftübertragung zwischen dem Antriebszahnrad 20 und der Abtriebswelle 19 vorgesehen sind.

Bei einer Kraftübertragung im regulären Antriebszustand rotiert eine Blockierscheibe 15 nach Art eines Rollenkäfigs kraftfrei schwimmend mit dem Antriebszahnrad 20 und der Abtriebswelle 19 mit. Die Kupplungsrollen 29 werden durch die vom Antriebszahnrad 20 übertragene Antriebskraft in einen Keilwinkel zwischen der kreiszylindrischen Innenfläche 28 des Antriebszahnrads 20 und Abflachungen 40 der Außenfläche des mit der Abtriebswelle 19 verbundenen polygonförmig gestalteter Kupplungsrings 31 eingeklemmt. Dadurch wird der Kupplungsring 31 kraftschlüssig mit dem Antriebszahnrad 20 mitgenommen.

Die Blockierscheibe 15 weist mehrere mit gleicher Teilung angeordnete Zähne 32 auf, die mit Schlitzen 33 voneinander beabstandet sind. Die Zähne 32 sind derart bemessen, dass sie in die Ringnut 34 eintauchen können, ohne in Kontakt mit der Innenfläche 28 des Antriebszahnrads 20 oder mit dem polygonförmigen Kupplungsring 31 zu geraten. Die Schlitze 33 nehmen die Kupplungsrollen 29 auf und können diese in der Ringnut 34 verschieben. Dabei sind Einzelflächen des polygonförmigen Kupplungsrings 31 derart ausgerichtet, dass sie in Zusammenwirkung mit der Innenfläche 28 des Antriebszahnrades 20 jeweils im Wesentlichen konisch geformte Spalte ausbilden, die derart bemessen sind, dass die Kupplungsrollen 29 darin geklemmt werden können. Die konischen Spalte sind im Bezug auf die Rotationsachse 10 des Zahnrads identisch ausgerichtet. Durch eine relative Verdrehung der Blockierscheibe 15 können die Kupplungsrollen 29 zwischen einer Klemmstellung mit dem polygonförmigen Kupplungsring 31 und dem Antriebszahnrad 20 sowie einer ungeklemmten Stellung verschoben werden, wobei in der Klemmstellung eine Kraftübertragung zwischen dem Antriebszahnrad 20 und der Abtriebswelle 19 erfolgen kann. In der ungeklemmten Stellung ist hingegen die Abtriebswelle 19 frei drehbar gegenüber dem Antriebszahnrad 20.

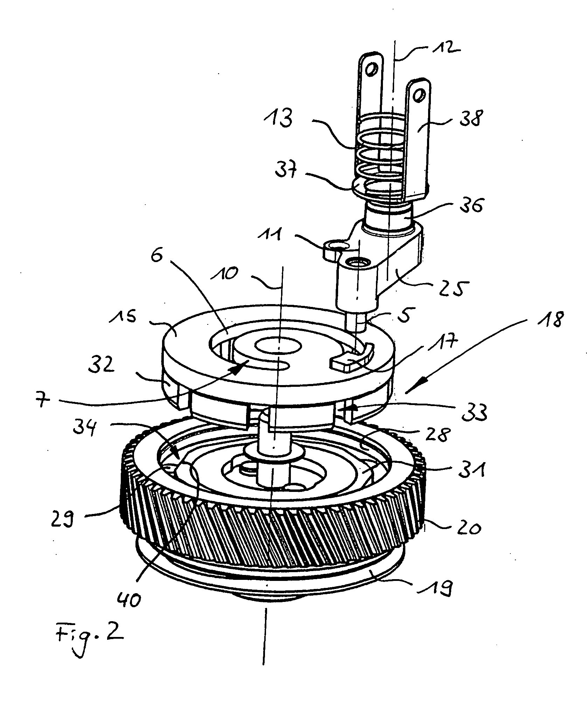

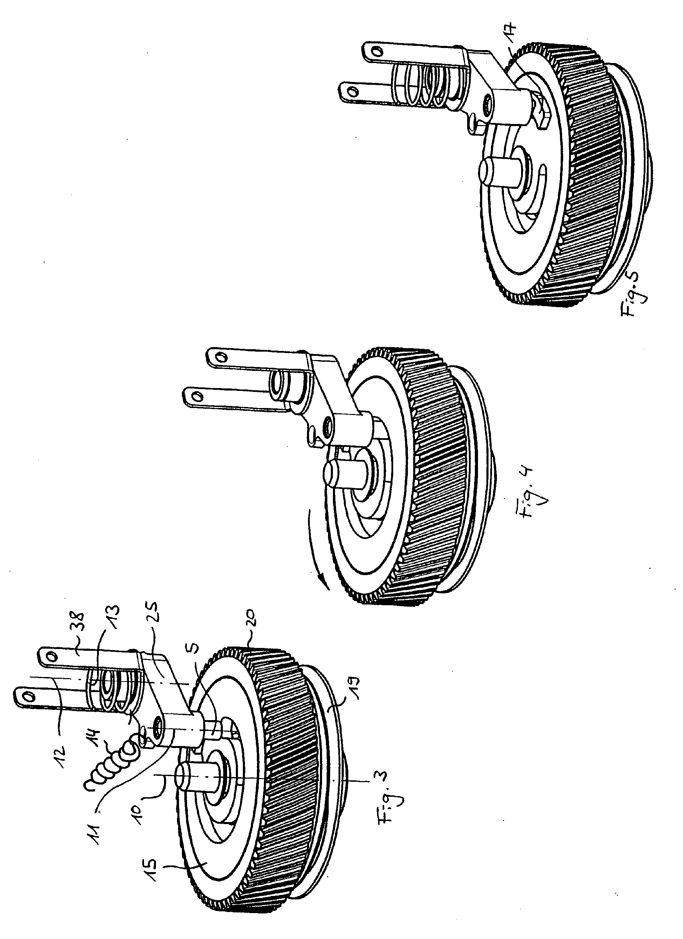

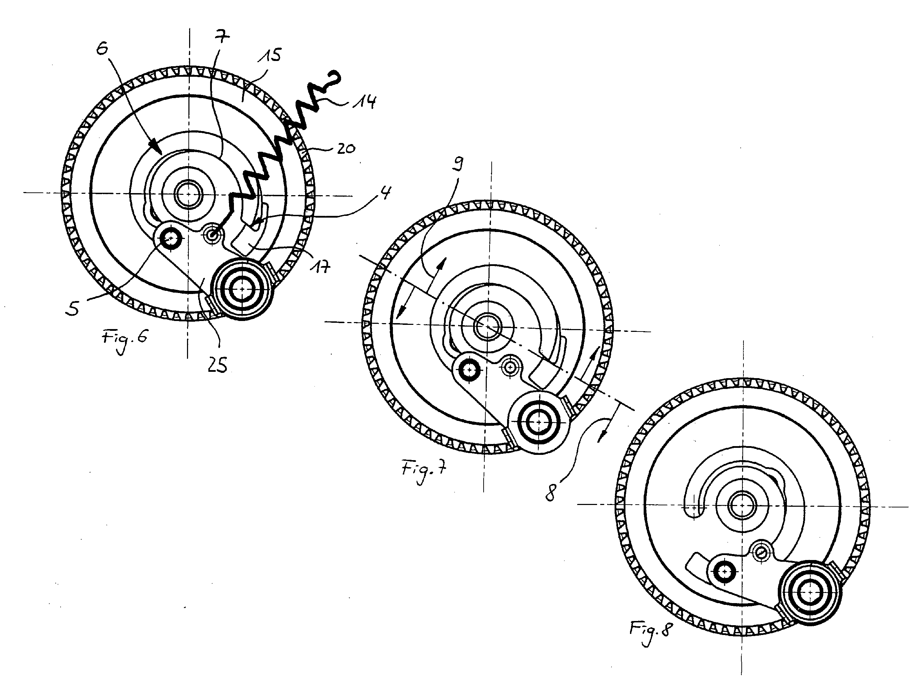

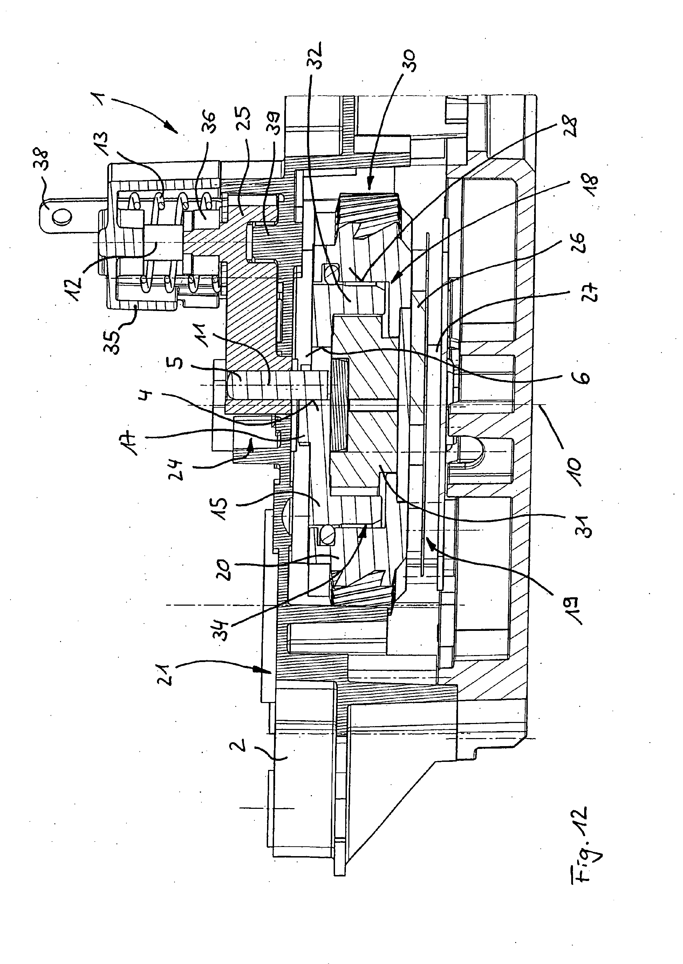

Die Blockierscheibe 15 bildet mit dem Gehäuse 2 und einem beweglich am Gehäuse 2 aufgenommenen Blockierelement 5 eine Stopeinrichtung 3, die für eine rasche Abbremsung des Antriebsstrangs 1 vorgesehen ist. Dazu ist an der Blockierscheibe 15 eine als Führungsmittel ausgeführte Führungsnut 6 vorgesehen, die abschnittsweise kreisförmig und abschnittsweise spiralförmig bezogen auf die Rotationsachse 10 gestaltet ist und die sich bezogen auf eine Rotationsachse der Blockierscheibe 15 in einem Winkelbereich von ungefähr 300 Grad über eine Oberfläche der Blockierscheibe 15 erstreckt. An einem Endbereich der Führungsnut 6 ist ein Nocken 17 angebracht, der erhaben aus einer von der Oberfläche der Blockierscheibe 15 bestimmten Ebene abragt und der zusammen mit einer Stirnfläche der Führungsnut 6 für eine formschlüssige Aufnahme des Blockierelements 5 vorgesehen ist. Eine Innenfläche der Führungsnut 6 mit einer radial nach außen weisenden Steuerfläche 7 ist für eine Ausübung von Führungskräften auf das als Blockierstift ausgeführte Blockierelement 5 vorgesehen. Das Blockierelement 5 ist an einem Hebelarm 25 schiebe- und schwenkbeweglich aufgenommen und kann zwischen einer in den Fig. 3, 6 und 9 dargestellten Ruheposition und einer in den Fig. 5, 8 und 11 dargestellten Funktionsposition bewegt werden. Dem Blockierelement 5 ist eine in den Fig. 1 und 2 näher dargestellte, als Wendelfeder ausgeführte Axialfeder 13 zugeordnet, die eine Druckkraft auf den Hebelarm 25 ausübt.

Weiterhin ist dem Blockierelement eine in der Fig. 6 schematisch dargestellte Schwenkfeder 14 zugeordnet, die für eine Rückstellung des Blockierelements 5 aus der Funktionsposition vorgesehen ist und seitlich am Hebelarm 25 angreift. Die Axialfeder 13 ist in einem Federgehäuse 35 aufgenommen. Der Hebelarm 15 ist drehbeweglich auf einem in Fig. 12 dargestellten Lagerzapfen 39 aufgenommen, der einstückig an dem Gehäuse 2 angebracht ist. Zwischen dem Hebelarm 25 und der Axialfeder 13 ist eine in der Fig. 1 näher dargestellte Zugeinrichtung 37 angeordnet, die mit zwei Laschen 38 aus dem Federgehäuse 35 ragt und die durch Ausübung einer Zugkraft eine Kompression der Axialfeder und eine axiale Bewegung des am Hebelarm 25 aufgenommenen Blockierelements 5 ermöglicht, so dass sich das Blockierelement 5 in axialer Richtung von der Blockierscheibe 15 entfernt. Die Laschen 38 können beispielsweise derart mit einem am Gartengerät vorgesehenen Betätigungsmittel gekoppelt sein, dass bei einer ordnungsgemäßen Benutzung des Gartengeräts eine Zugkraft auf die Laschen 38 übertragen wird und damit das Blockierelement 5 in der Ruhestellung gehalten wird. Sobald die Betätigungsmittel nicht mehr betätigt werden, wird keine Zugkraft mehr auf die Laschen 38 ausgeübt und die Axialfeder 13 bewirkt eine Bewegung des Blockierelements 5 aus der Ruhestellung in die Wartestellung in Richtung der Blockierscheibe 15.

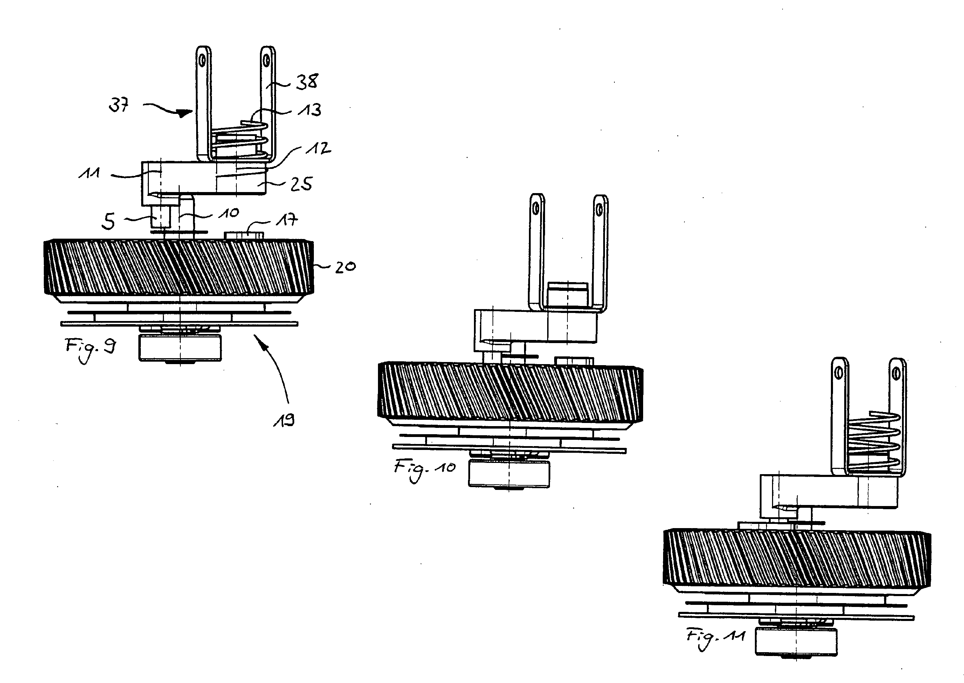

In den Fig. 3 bis 11 sind drei jeweils aufeinanderfolgende Stellungen des Blockierelements in drei unterschiedlichen Perspektiven dargestellt. In den Fig. 3, 6 und 9 ist das Blockierelement 5 in einer Ruhestellung dargestellt. In den Fig. 4, 7 und 10 ist das Blockierelement 5 in einer Wartestellung abgebildet. In den Fig. 5, 8 und 11 ist das Blockierelement 5 in der Funktionsposition dargestellt. In der Ruhestellung ist die Axialfeder 13 durch Zugkräfte, die von Betätigungsmitteln auf die Zugeinrichtung 37 wirken, komprimiert und das Blockierelement 5 ist in einer von der Blockierscheibe 15 entfernten Stellung angeordnet, wobei die Schwenkfeder 14 eine Zugkraft auf den Hebelarm 25 ausübt und damit eine achsnahe Stellung des Blockierelements 5 bezogen auf die Rotationsachse 10 bewirkt. Entfallen die Zugkräfte auf die Zugeinrichtung 37, so entspannt sich die Axialfeder 13 und drückt den Hebelarm 25 mit dem daran aufgenommenen Blockierelement 5 in Richtung der Blockierscheibe 15, während die Schwenkfeder 14 weiterhin für eine achsnahe Stellung des Blockierelements sorgt. Das Blockierelement 5 nimmt bedingt durch die Federkräfte eine Wartestellung ein, in der es entweder mit einer der Blockierscheibe 15 zugewandten Stirnseite auf der Blockierscheibe 15 aufliegt oder bereits in einem kreisförmig gestalteten Abschnitt der Führungsnut 6 formschlüssig aufgenommen ist und sich somit im Neutralbereich der Blockierscheibe 15 befindet. Durch eine Rotation der Blockierscheibe 15 um die Rotationsachse 10, in den Darstellungen der Fig. 6 bis 9 entgegen dem Uhrzeigersinn, kommt das Blockierelement 5 in Anlage zu der Steuerfläche 7, die im spiralförmigen Abschnitt der Führungsnut 6 ausgebildet ist. Dadurch wird das Blockierelement 5 entgegen der Federkraft der Schwenkfeder 14 aus der achsnahen Stellung in radialer Richtung nach außen ausgelenkt und trifft auf den Nocken 17 auf, der die Führungsnut 6 in einem Endbereich begrenzt. Durch das Auftreffen des Blockierelements 5 auf den Nocken 17 kann eine Blockierkraft von dem Blockierelement 5 auf die Blockierscheibe 15 und damit auf die Abtriebswelle 19 übertragen werden, so dass die an der Abtriebswelle 19 angebrachten Arbeitseinrichtungen schlagartig abgebremst werden. Da das Antriebszahnrad 20 mit dem Antriebsmotor gekoppelt ist, der ein großes Massenträgheitsmoment aufweist, kommt es zu einer Relativbewegung zwischen der vollständig abgebremsten Blockierscheibe 15 und dem Antriebszahnrad 20. Durch diese Relativbewegung wird die formschlüssige Klemmverbindung zwischen dem polygonen Kupplungsring 31 der Abtriebswelle 19, den Kupplungsrollen 29 und dem Antriebszahnrad 20 gelöst und das Antriebszahnrad 20 kann sich frei weiterdrehen, so dass der Rotor des Antriebsmotors keine schlagartige Abbremsung erfährt, sondern langsam auslaufen kann oder elektrisch abgebremst werden kann.

Beim Blockieren der Blockierscheibe 15 werden die Kupplungsrollen 29 schlagartig aus der kraftschlüssigen Klemmstellung gerissen. Der Kupplungsring 31 mit der Abtriebswelle 19 bleibt aufgrund der Belastung durch das Werkzeug zeitlich und in der Winkelstellung nahezu unverzögert stehen, so dass die Kupplungsrollen 29 nunmehr in radial tieferen Bereichen der keilförmigen Räume zwischen den Abflachungen 40 und der zylindrischen Innenfläche 28 liegen. Selbst ein geringfügiges Weiterlaufen des Werkzeugs aufgrund dessen Massenträgheit wäre unproblematisch. In diesem Fall würde lediglich der Kupplungsring 31 so weit weitergedreht werden können, bis auf der jetzt entgegengesetzten Richtung wiederum an einer Keilwinkelposition die Abflachungen 40 des Kupplungsrings 31 die Kupplungsrollen 29 gegen die zylindrische Innenfläche 28 des Antriebszahnrads 20 drückt, aber wegen der stillstehenden Blockierscheibe 15 nicht weitergedreht werden kann und spätestens in dieser Stellung stehen bleibt. Die Position der Kupplungsrollen 29 in diesem entgegengesetzten Keilwinkel ist unproblematisch, da das Kraft ausübende Antriebszahnrad 20 in dieser Position auf die Kupplungsrollen 29 eine Kraft ausübt, welche diese aus dem Keilwinkel herauszieht. Die Kupplungsrollen 29 werden deshalb durch das Antriebsrad 20 allenfalls kurzfristig um ihre Rollenachse gedreht, üben aber keine mitnehmende Kraft auf den Kupplungsring 31 aus.

Nach Aufhebung der Arretierung der Blockierscheibe 15 wird die Blockierscheibe 15 für den erneuten Eingriff der Kupplungsrollen 29 in die Klemmstellung an sich nicht benötigt. Die Kupplungsrollen 29 werden typischerweise durch zufällige Berührung oder über Schmiermittelkontakt mit der zylindrischen Innenfläche 28 des Antriebszahnrads 20 in die Keilwinkel mitgenommen und dort wieder kraftschlüssig zur Übertragung der Antriebskraft eingeklemmt. Die Blockierscheibe 15 koordiniert aber in ihrer Eigenschaft als Rollenkäfig die gemeinsame Verschiebung der mehreren Kupplungsrollen 29 in Richtung der Keilwinkel. Ferner kann auch die Blockierscheibe 15 geringen Mitnahmekräften des anfangs kurzzeitig leer drehenden Antriebszahnrads 20 ausgesetzt sein und über diesen Mechanismus auf die Kupplungsrollen 29 einwirken.

Sobald die Betätigungsmittel wieder bestimmungsgemäß durch einen Benutzer betätigt werden, wird eine Zugkraft auf die Laschen 38 ausgeübt, die zu einer Kompression der Axialfeder 13 und zu einer Bewegung des Blockierelements 5 aus der Funktionsstellung führt, so dass die Blockierscheibe 15 freigegeben wird und durch das vom Antriebsmotor aufgebrachte Antriebsmoment erneut eine formschlüssige Wirkverbindung der Kupplungseinrichtung 18 zur Übertragung der Antriebsbewegung auf die Abtriebswelle 19 aufgebaut werden kann.

## Patentansprüche

1. Motorbetriebenes Gartengerät, insbesondere Heckenschere, mit einem Antriebsstrang (1) zur Übertragung einer Antriebsbewegung eines Antriebsmotors an eine Arbeitseinrichtung, mit einer dem Antriebsstrang zugeordneten Stopeinrichtung (3), die zumindest eine mit dem Antriebsstrang (1) verbundene Stopfläche (4) und zumindest ein zwischen einer Ruhestellung und einer Funktionsstellung bewegbares Blockierelement (5) für eine formschlüssige Übertragung einer Blockierkraft auf die Stopfläche (4) aufweist, **dadurch gekennzeichnet, dass** der Stopfläche (4) Führungsmittel (6) zugeordnet sind, die zur Ausrichtung des Blockierelements (5) in Richtung der Stopfläche (4) vorgesehen sind.

2. Motorbetriebenes Gerät nach Anspruch 1, **dadurch gekennzeichnet, dass** die Führungsmittel (6) zumindest eine Steuerfläche (7) aufweisen, die für eine zumindest abschnittsweise Zwangsführung des Blockierelements (5) zwischen der Ruhestellung und der Funktionsstellung vorgesehen ist.

3. Motorbetriebenes Gerät nach Anspruch 1 oder 2, **dadurch gekennzeichnet, dass** die Führungsmittel (6) starr mit dem Antriebsstrang (1) verbunden sind.

4. Motorbetriebenes Gerät nach einem der vorhergehenden Ansprüche, **dadurch gekennzeichnet, dass** das Blockierelement (5) in eine zwischen der Ruhestellung und der Funktionsstellung angesiedelte Wartestellung bringbar ist, in der es durch die Führungsmittel (6) erfassbar und in die Funktionsstellung überführbar ist.

5. Motorbetriebenes Gerät nach Anspruch 4, **dadurch gekennzeichnet, dass** die Führungsmittel (6) an dem insbesondere gleichsinnig oder reversibel bewegbaren Antriebsstrang (1) zumindest einen Neutralbereich (8) und zumindest einen Erfassungsbereich (9) für das zumindest eine Blockierelement (5) bilden, wobei eine Auslenkung des Blockierelements (5) aus der Wartestellung in die Funktionsstellung im Erfassungsbereich (9) vorgesehen ist.

6. Motorbetriebenes Gerät nach einem der vorhergehenden Ansprüche, **dadurch gekennzeichnet, dass** das Blockierelement (5) mit zumindest zwei Freiheitsgraden der Bewegung, insbesondere einem translatorischen und einem rotatorischen Freiheitsgrad, an einem dem Antriebsstrang (1) zugeordneten Gehäuse (2) angebracht ist.

7. Motorbetriebenes Gerät nach einem der vorhergehenden Ansprüche, **dadurch gekennzeichnet, dass** dem Blockierelement (5) zumindest eine Federeinrichtung (13, 14) zugeordnet ist, die für die Aufbringung einer Rückstellkraft entgegen einer von den Führungsmitteln (6) ausübbaren Führungskraft vorgesehen ist.

8. Motorbetriebenes Gerät nach einem der vorhergehenden Ansprüche, **dadurch gekennzeichnet, dass** die zumindest eine Stopfläche (4) und die Führungsmittel (6) an einer Blockierscheibe (15) vorgesehen sind, die an einem drehbeweglichen Übertragungselement des Antriebsstrangs angebracht ist.

9. Motorbetriebenes Gerät nach Anspruch 8, **dadurch gekennzeichnet, dass** die Führungsmittel (6) derart gestaltet sind, dass der zumindest eine Neutralbereich (8) und der zumindest eine Erfassungsbereich (9) jeweils kreissegmentartig aneinandergrenzend an der Blockierscheibe (15) angeordnet sind.

10. Motorbetriebenes Gerät nach Anspruch 8 oder 9, **dadurch gekennzeichnet, dass** die Steuerfläche (7) bezogen auf eine Rotationsachse (10) der Blockierscheibe (15) zumindest abschnittsweise kreisförmig und/oder spiralförmig gestaltet ist und für eine seitliche Auslenkung des Blockierelements (5) in radialer Richtung vorgesehen ist.

11. Motorbetriebenes Gerät nach Anspruch 8, **dadurch gekennzeichnet, dass** das Blockierelement (5) für eine im wesentlichen achsparallel zur Rotationsachse (10) der Blockierscheibe (15) ausgerichtete Bewegung zwischen der Ruhestellung und der Wartestellung sowie für eine im wesentlichen radial zur Rotationsachse (10) der Blockierscheibe (15) gerichtete Bewegung zwischen der Wartestellung und der Funktionsstellung gestaltet ist.

12. Motorbetriebenes Gerät nach Anspruch 8, **dadurch gekennzeichnet, dass** die Stopfläche (4) an einem von der Blockierscheibe (15) abragenden Nocken (17) ausgebildet ist.

13. Motorbetriebenes Gerät nach Anspruch 8, **dadurch gekennzeichnet, dass** die Führungsmittel (6) zumindest abschnittsweise als Führungsnut in der Blockierscheibe (15) gestaltet sind.

14. Motorbetriebenes Gerät nach Anspruch 8, **dadurch gekennzeichnet, dass** die Blockierscheibe (15) einer im Antriebsstrang (1) vorgesehenen Kupplungseinrichtung (18) zugeordnet ist, die für eine zeitweilige, lösbare Kopplung zwischen Antriebsmotor und Arbeitseinrichtung vorgesehen ist.

15. Motorbetriebenes Gerät nach Anspruch 14, **dadurch gekennzeichnet, dass** die Kupplungseinrichtung (18) zur lösbaren Ankopplung einer insbesondere als Doppelexzenterwelle ausgeführten, mit der Arbeitseinrichtung verbundenen Abtriebswelle (19) an ein dem Antriebsmotor zugeordnetes Antriebszahnrad (20) vorgesehen ist.

16. Motorbetriebenes Gerät nach Anspruch 15, **dadurch gekennzeichnet, dass** die Arbeitseinrichtung zumindest ein Messerblatt, insbesondere zwei gegenläufige Messerblätter, aufweist.

17. Motorbetriebenes Gerät nach Anspruch 16, **dadurch gekennzeichnet, dass** das Blockierelement (5) mit zumindest einer Griffeinrichtung derart gekoppelt ist, dass eine formschlüssige Wirkverbindung zwischen Blockierelement (5) und Stopfläche (4) durch Betätigung der zumindest einen Griffeinrichtung aufhebbar ist.
